# EUROPEAN PATENT SPECIFICATION

(11) **EP 2 771 198 B1**
(45) Date of publication and mention of the grant of the patent: **03.04.2019**
(21) Application number: 12787836.1
(22) Date of filing: 24.10.2012
(51) Int. Cl.: B60C 7/10, B29L 30/00, B29K 75/00, B29C 41/00, B29C 41/04, B29C 41/22, B29C 39/00, B29C 39/02, B29C 39/08, B29D 30/02

(54) **TYRE**
REIFEN
PNEU

(30) Priority: 24.10.2011 GB 201118302
(43) Date of publication of application: 03.09.2014
(73) Proprietor: Starco DML Limited, Crewe, Cheshire CW2 8UY (GB)
(72) Inventor: ANDREWS, Mike, Crewe CW2 8UY (GB)
(74) Representative: Stephenson, Philip
(86) International application number: PCT/GB2012/052638
(87) International publication number: WO 2013/061055

(56) References cited:
- US-A- 4 040 670
- US-A- 4 295 686
- US-A1- 2008 303 337
- US-A1- 2009 211 677
- US-B1- 6 592 189

## Description

The present invention relates to tyres and wheels, as well as methods of producing the same.
Although the present description refers to tyres and wheels for forklift trucks, the person skilled in the art will appreciate that the present invention can be used on other vehicles and load bearing equipment and is not limited exclusively to forklift trucks.
Conventional forklift truck tyres are typically made of one piece of rubber. These tyres are either pressed into single-piece wheels (wheels with a single hub) or held between the dual hubs of two-piece wheels. Both types of conventional wheels have centrally located well or recess formed around the circumference of the hub. Conventional tyres have a sizable protrusion which is inserted into the well to hold the tyre in place. The protrusion increases the overall weight of the tyre and makes changing the tyre more difficult.
Furthermore, due to the tyre being constructed from a single piece of rubber, the user is unable to ascertain when the tyre tread has worn away to such a degree that the tyre should be replaced. As such, forklift truck tyres are replaced at set time intervals whether the tyre needs replacing or not. This results in an unnecessary replacement of tyres and increased costs for the user.

US2008303337 discloses a forklift truck wheel tyre according to the preamble of claim 1 including retention elements for affixing a polyurethane tyre to a hub. The polyurethane tyres of the wheels disclosed are manufactured separate from the hub and the mechanical properties of the tyre can be tailored by selection of the polyurethane monomers.
It is therefore an aim of the present invention to provide an improved tyre, which addresses the abovementioned problems.
It is a further aim of the present invention to provide a forklift truck tyre which can be located on conventional wheels and/or custom manufactured wheels, said tyre being lightweight, non-marking and has improved wear properties.

In a first aspect of the invention there is provided a tyre according to claim 1.
Typically one or more of the inner layers is any one or any combination of denser, firmer and/or more rigid polymer material than the first outermost layer.
Typically the outermost layer is the tyre tread layer. Further typically the outermost layer includes a tread and is more flexible than the inner layer underneath the same, in order to improve grip on the surface on which the tyre travels.
Preferably the tyre comprises two layers wherein the inner layer is more rigid than the outer.
In one embodiment the more rigid layer forms a ring under the outer layer. Typically the ring has a cross sectional area which is less than the cross sectional area of the outermost layer, when viewed along the latitudinal or circumferential axis.

Typically the isocyanate is an aromatic isocyanate. In one embodiment the aromatic isocyanate includes diphenylmethane diisocyanate (MDI).
The relative amounts of the three MDI isomers (4,4'-MDI, 2,4'-MDI, and 2,2'-MDI) can be selected to change physical properties of the layers, i.e. selecting the isomer amounts/ratios for a more rigid layer.

Typically the polyurethane is manufactured from an aromatic isocyanate mixed with a polyol.
Typically the polyol is a polyester and/or a polyether. Preferably the polyol used in the polymerisation of the outermost layer is a polyester.
Further typically the molecular weight and/or the functional groups of the polyol polymer can be selected to change the physical properties of the polyurethane.
In one embodiment the polymeric layers are crosslinked together. Typically the outermost layer is crosslinked to the layer underneath the same.
In one embodiment at least the outermost layer of the tyre is a natural colour, in as much that no pigments and/or dye containing compounds are added to the same. This produces a tyre in which at least the outermost layer is non-marking.
In one embodiment at least one of the layers is of a different appearance to the layer adjacent to the same. Typically the different appearance is due to the layers being different colours. Further typically any one or any combination of pigments, dyes and/or colorants are added to the polymeric mixture to colour one or more layers.

In one embodiment at least one of the inner layers underneath the outermost layer is of a different colour and/or appearance.
Typically when the outermost or tread layer is worn away the different colour and/or appearance of the inner layer begins to show through. Thus an indication is given as to when the tyre needs changing.
In one embodiment the outermost layer is substantially opaque. Thus, only when the tread is worn away does the inner layer become visible.
In an alternative embodiment the outermost layer is any one or any combination of partially opaque, substantially semitransparent and/or transparent polymer material. Thus, the layer underneath the tread becomes increasingly visible as the tread wears away.

In an example not according to the invention there is provided a method of making a tyre including at least two polymeric layers according to claim 1, said method including the steps of;
- spinning and/or rotating a mould about an axis;
- introducing a first material into the mould where said first material can be polymerised into the outermost polymeric layer;
- introducing at least a second material into the mould where said second material can be polymerised into an inner polymeric layer; and
- polymerising said first and at least second materials to form two or more layers
wherein the at least second layer is more rigid than the outermost layer.

In one embodiment not according to the invention the mould includes or is substantially constructed from steel and/or stainless steel. Typically the steel has a higher specific heat capacity that conventional aluminium moulds.
Typically the mould is heated to a temperature substantially equal to or above 80 °C. Further typically the temperature of the mould in not in excess of 120 °C. In one embodiment the mould is heated to temperature 90°C-110°C. Preferably the temperature of the mould is substantially 100 °C.

In one embodiment not according to the invention the first material gels and/or forms a gel before the second material is added.

In one example not according to the invention the first material is polymerised or at least partially cured before the second material is introduced.

In a further example not according to the invention the first material is only partially polymerised or cured before the second material is introduced.

In one example not according to the invention the two or more layers are crosslinked together.
Typically the second polymer material is introduced before the first material is fully cured, thus effecting improving the cross-linking between the two materials and/or layers.

In one example there is provided a wheel suitable for use with a vehicle such as a forklift truck or similar, said wheel including a tyre comprising two or more layers according to claim 1.
In one embodiment the tyre includes one or more recesses located substantially at the edge of the same. Typically the wheel rim or hub includes one or more protrusions which can engage with the recesses to improve the tyre fit and prevent slippage.

Typically the recesses prevent the tyre from slipping on the rim and/or hub.

Specific embodiments of the invention are now described with reference to the following figures, wherein;
Figure 1 shows a forklift truck wheel in accordance with one aspect of the invention;
Figure 2 shows a forklift truck wheel hub in accordance with one embodiment of the invention;
Figure 3 shows a tyre in accordance with one embodiment of the invention; and
Figure 4a shows a cross sectional view through the tyre and the mould; and
Figure 4b blank used in the production of tyres in accordance with the invention.

The present invention discloses a new tyre which is suitable for use with relatively slow moving, load-carrying vehicles such as forklift trucks and the like. The tyre has at two or more layers, wherein the outermost or 'tread' layer is more flexible and less rigid than the layer underneath. The more rigid layer underneath allows the tyre to be held in position and function without requiring a large amount of material to be situated in the recess/well in the wheel or hub. As a result the tyre of the present invention is lighter and less expensive than conventional tyres and wheels.

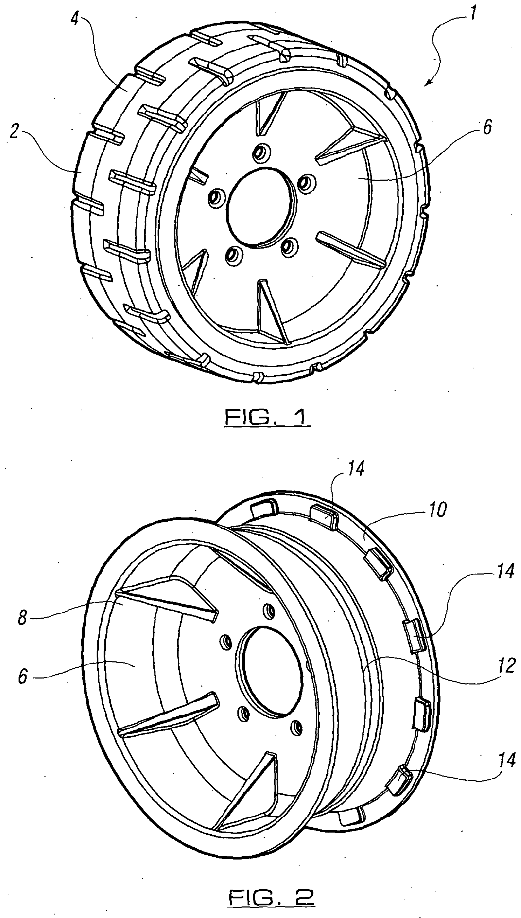

Turning firstly to figure 1 where there is shown a forklift truck wheel 1 including a tyre 2 which comprises two layers of polyurethane. The outer tread layer 4 is constructed of polyurethane which is more elastic and flexible than the layer underneath. Conventional tyres have a relatively large amount of material located centrally around the inside of the tyre which sits in a recess in the wheel hub 6. This material holds the tyre in position when in use but increases the weight of the same. As such, changing conventional tyres is difficult. The new tyre 2 shown in figure 1 requires less material to manufacture the same and has a lower profile. As a result the new tyre 2 is lighter and easier to change to the extent that changing can be performed without the hydraulic press usually required.

In the example shown in figure 1 the inner layer underneath the outer layer 2 is coloured. This provides a further advantage because as the tread of the outer layer wears away through use, the coloured layer underneath is exposed. Thus the layers provide an indication to the operator that the tyre needs changing, improving safety and saving on unnecessary tyre changes.
Figure 2 shows a wheel hub 6 to which the new tyre can be fitted. This particular hub is a two-piece hub which is assembled from two rims 8, 10. When the rims are attached together the hub 6 includes a recess 12 located centrally around the circumference of the hub. The recess on conventional forklift wheel hubs can be relatively deep in order to secure the tyre to the same. The recess 12 shown here is much shallower in comparison very little or none of the tyre is required to sit in the recess in order to secure the tyre to the hub 6.

In addition, the hub 6 includes a number of protrusions or projections 14 which increases the frictional force between the hub 6 and the tyre, thus helping to prevent slippage between the tyre and the hub.

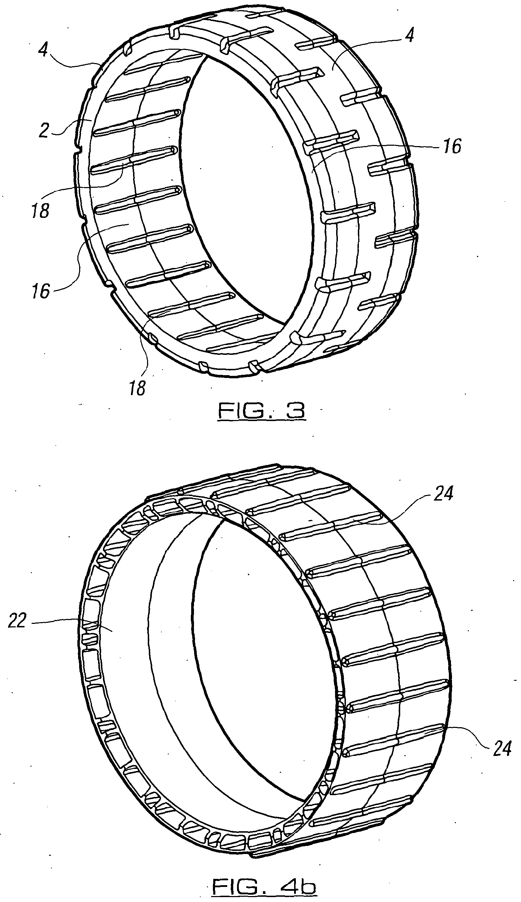

Turning now to figure 3 where there is shown the tyre 2 free from the wheel hub. The outer layer 4 is constructed from a polyurethane which is substantially less rigid, less firm and more flexible than the polyurethane layer underneath 16. This composition ensures than the vehicle to which the wheel is attached has a tyre where the tread is soft enough to provide grip to the surface on which it is travelling, and the layer of the tyre underneath the tread is hard enough to secure the same to the wheel hub. It can be seen that the under layer 16 has a number of recesses or troughs 18 formed in the same. These troughs are formed by the mould in which the tyre is formed and help to reduce the overall weight of the tyre without compromising the strength by which the tyre is fixed to the wheel.

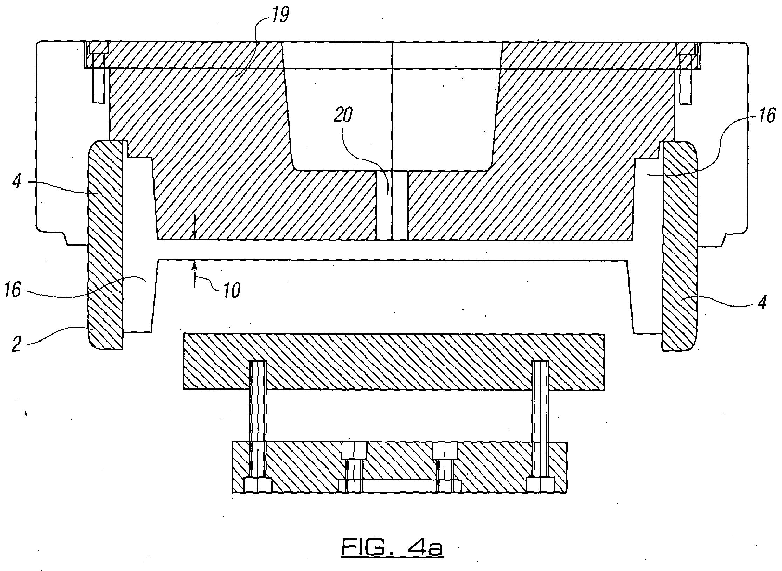

Figure 4a shows a cross sectional view through the spin moulding apparatus 19 in which the tyre 2 is formed. Typically the mould is spun and the liquid polymer injected though the central feed bore 20. The polymer making up the outer tread layer 4 of the tyre is introduced first. The precursor may be a liquid precursor until cured and/or heat may be applied to ensure the polymer mixture is liquid when introduced. Subsequently the polymer for the second more rigid layer under the tread is introduced, which too may be a liquid precursor and/or molten polymer until cured. A cross-linking agent may also be introduced at this point to ensure the inner and outer polymer layers are strongly bonded together.

The person skilled in the art will appreciate that tread patterns including recesses and ridges may be formed in the tyre 2 by shaping the mould. Figure 4b shows a blank 22 for the mould 19 which includes a number of ridges or ribs 24 which form the corresponding recesses or troughs 18 in the inner layer 16 of the tyre 2 as shown in figure 3.

## Claims

1. A fork lift truck tyre including two layers (4, 16), a first outer layer (4) of polyurethane compound and a further layer (16) of polyurethane compound substantially under the first layer (4), the polyurethane layers (4, 16) are produced using an isocyanate and a polyol **characterised in that** the outermost polyurethane layer (4) is more flexible than the further layer (16) underneath the same.

2. A tyre according to claim 1 **characterised in that** the outermost layer includes a tread.

3. A tyre according to claim 1 wherein the further layer forms a ring under the first layer, said inner layer having a cross sectional area smaller than that of the outer layer.

4. A tyre according to claim 1 wherein the isocyanate is diphenylmethane diisocyanate (MDI) and the relative amounts of three MDI isomers (4,4'-MDI, 2,4'-MDI, and 2,2'-MDI) are selected such that the outermost polyurethane layer (4) is substantially more flexible than the one or more further layers (16) underneath the same.

## Patentansprüche

1. Gabelstaplerreifen, der zwei Schichten (4,16) umfasst, eine erste äußere Schicht (4) aus einer Polyurethanverbindung und eine weitere Schicht (16) aus einer Polyurethanverbindung im Wesentlichen unter der ersten Schicht (4), wobei die Polyurethanschichten (4, 16) unter Verwendung eines Isocyanats und eines Polyols produziert werden, **dadurch gekennzeichnet, dass** die äußerste Polyurethanschicht (4) flexibler als die weitere Schicht (16) darunter ist.

2. Reifen nach Anspruch 1, **dadurch gekennzeichnet, dass** die äußerste Schicht eine Lauffläche beinhaltet.

3. Reifen nach Anspruch 1, wobei die weitere Schicht einen Ring unter der ersten Schicht bildet, wobei die genannte innere Schicht einen kleineren Querschnittsbereich als die äußere Schicht hat.

4. Reifen nach Anspruch 1, wobei das Isocyanat Diphenylmethandiisocyanat (MDI) ist und die relativen Mengen der drei MDI-Isomere (4,4'-MDI, 2,4'-MDI und 2,2'-MDI) so ausgewählt sind, dass die äußerste Polyurethanschicht (4) wesentlich flexibler als die eine oder mehreren weiteren Schichten (16) darunter ist.

## Revendications

1. Pneu de chariot élévateur à fourches incluant deux couches (4, 16), une première couche extérieure (4) en un composé de polyuréthanne et une couche supplémentaire (16) en un composé de polyuréthanne substantiellement sous la première couche (4), les couches de polyuréthanne (4, 16) étant produites grâce à l'utilisation d'un isocyanate et d'un polyol, **caractérisé en ce que** la couche de polyuréthanne située le plus à l'extérieur (4) est plus souple que la couche supplémentaire (16) en dessous de celle-ci.

2. Pneu selon la revendication 1, **caractérisé en ce que** la couche située le plus à l'extérieur inclut une bande de roulement.

3. Pneu selon la revendication 1, la couche supplémentaire formant une couronne sous la première couche, ladite couche interne ayant une aire en coupe transversale qui est plus petite que celle de la couche extérieure.

4. Pneu selon la revendication 1, l'isocyanate étant le diphénylméthane diisocyanate (MDI) et les quantités relatives de trois isomères MDI (4,4'-MDI, 2,4'-MDI et 2,2'-MDI) étant sélectionnées de telle sorte que la couche de polyuréthanne située le plus à l'extérieur (4) est substantiellement plus souple que lesdites une ou plusieurs couches supplémentaires (16) en dessous de celle-ci.
